# EUROPÄISCHE PATENTSCHRIFT

(11) **EP 2 752 084 B1**
(45) Veröffentlichungstag und Bekanntmachung des Hinweises auf die Patenterteilung: **12.06.2019**
(21) Anmeldenummer: 12748500.1
(22) Anmeldetag: 21.08.2012
(51) Int. Cl.: H05B 3/26

(54) **ELEKTRISCHE HEIZEINHEIT, HEIZVORRICHTUNG FÜR EIN FAHRZEUG UND VERFAHREN ZUR HERSTELLUNG EINER HEIZEINHEIT**
ELECTRICAL HEATING UNIT, HEATING DEVICE FOR A VEHICLE AND METHOD FOR PRODUCING A HEATING UNIT
UNITÉ DE CHAUFFAGE ÉLECTRIQUE, DISPOSITIF DE CHAUFFAGE POUR UN VÉHICULE ET PROCÉDÉ DESTINÉ À FABRIQUER UNE UNITÉ DE CHAUFFAGE

(30) Priorität: 30.08.2011 DE 102011081831
(43) Veröffentlichungstag der Anmeldung: 09.07.2014
(73) Patentinhaber: Webasto SE, 82131 Stockdorf (DE)
(72) Erfinder: BYTZEK, Dietmar, 76726 Germersheim (DE)
(74) Vertreter: Schumacher & Willsau
(86) Internationale Anmeldenummer: PCT/EP2012/066281
(87) Internationale Veröffentlichungsnummer: WO 2013/030048

(56) Entgegenhaltungen:
- WO-A1-03/017725
- WO-A1-2011/085915
- DE-B- 1 141 737
- FR-A1- 2 642 929
- US-A1- 2007 133 964

## Beschreibung

Die Erfindung betrifft eine elektrische Heizeinheit für eine Heizvorrichtung für ein Fahrzeug, mit einer Heizschicht und einem Wärmeleitkörper, wobei die Heizschicht mindestens einen Heizwiderstand aufweist und der Wärmeleitkörper eine Wärmeaufnahmefläche zur Aufnahme von Wärme von der Heizschicht und eine Wärmeabgabefläche zur Abgabe von Wärme an ein Wärmeträgerfluid aufweist. Die Erfindung betrifft außerdem eine Heizvorrichtung für ein Fahrzeug sowie ein Verfahren zur Herstellung einer Heizeinheit.

Derartige Heizvorrichtungen werden häufig als Zusatzheizung eingesetzt, zum Beispiel in Kraftfahrzeugen. Sie ermöglichen die Erzeugung von Wärme, ohne dabei auf einen Verbrennungsmotor angewiesen zu sein. Die Wärme kann beispielsweise zum Erwärmen von Luft für einen Innenraum verwendet werden. Elektrische Heizvorrichtungen sind daher insbesondere auch in Fahrzeugen ohne Verbrennungsmotor einsetzbar, zum Beispiel in Elektrofahrzeugen, Eisenbahnwaggons, Segelbooten, Flugzeugen sowie in mobilen Arbeits- oder Wohncontainern.

Als Wärmeleitkörper kann beispielsweise eine wellblechartige oder ziehharmonikaartig gefaltete wärmeleitende Struktur verwendet werden. Eine derartige Struktur weist Extremalstellen auf, die mit der Heizschicht direkt oder indirekt in Kontakt stehen können, um Wärme von der Heizschicht zu empfangen und über den Rest der Struktur weiterzuleiten. Eine derartige Vorrichtung ist aus der deutschen Patentschrift DE 100 32 099 C1 bekannt.

Der vorliegenden Erfindung liegt die Aufgabe zugrunde, eine elektrische Heizeinheit anzugeben, die imstande ist, die in der Heizschicht erzeugte Wärme möglichst schnell an das Wärmeträgerfluid abzuleiten, mechanisch robust ist und einfach herzustellen ist. Der Erfindung liegt ferner die Aufgabe zugrunde, eine Heizvorrichtung mit einer derartigen Heizeinheit anzugeben. Der Erfindung liegt weiter die Aufgabe zugrunde, ein Verfahren zur Herstellung einer derartigen Heizeinheit anzugeben. Diese Aufgaben werden durch die Merkmale der unabhängigen Ansprüche gelöst. Vorteilhafte Ausgestaltungen ergeben sich aus den abhängigen Ansprüchen.

Die elektrische Heizeinheit baut auf dem gattungsgemäßen Stand der Technik dadurch auf, dass der Wärmeleitkörper einen Grundkörper und mindestens zwei Wärmeabgabekörper aufweist, wobei der Grundkörper und die Wärmeabgabekörper stoffschlüssig miteinander verbunden oder aus einem Stück sind, wobei die Wärmeaufnahmefläche eine der Heizschicht zugewandte und sich parallel zu der Heizschicht erstreckende Oberfläche des Grundkörpers ist und die Wärmeabgabefläche eine Oberfläche der Wärmeabgabeköper ist. Die sich parallel zu der Heizschicht erstreckende Wärmeaufnahmefläche kann im Vergleich zu der gesamten Oberfläche von Extremalstellen einer bekannten wellblechartigen Wärmeableitstruktur deutlich größer sein. Die einstückige oder stoffschlüssige Ausgestaltung des Grundkörpers und der Wärmeabgabekörper führt zudem zu einem guten Wärmefluss und zu einer hohen Robustheit. Der Grundkörper kann beispielsweise als Substrat für die Heizschicht dienen. Auf ein zusätzliches tragendes Element zwischen dem Wärmeleitkörper und der Heizschicht kann verzichtet werden. Die Wärmeabgabefläche kann eine zusammenhängende Oberfläche der mindestens zwei Wärmeabgabekörper sein oder aber aus getrennten Oberflächen bestehen. Beispielsweise können die Wärmeabgabekörper Oberflächen aufweisen, die sich untereinander nicht berühren, gemeinsam aber die genannte Wärmeabgabefläche bilden. Das Wärmeträgerfluid kann beispielsweise Luft oder eine Flüssigkeit sein. Die Heizvorrichtung kann so ausgestaltet sein, dass im Betrieb das Wärmeträgerfluid an der Wärmeabgabefläche des Wärmeleitkörpers entlangströmt. Die Heizvorrichtung kann beispielweise ein Gebläse oder eine Pumpe zum Erzeugen der Strömung des Wärmeträgerfluids aufweisen. Die Flüssigkeit kann zum Beispiel Wasser sein. Es ist möglich, dass das Wärmeträgerfluid als Wärmetransportmedium in einem Wärmetauscher verwendet wird. Dies bedeutet, dass die Heizvorrichtung einen Wärmetauscher aufweist oder mit einem Wärmetauscher in Verbindung steht, durch den das Wärmeträgerfluid strömt. Der Wärmetauscher überträgt dann zumindest einen Teil der Wärme des Wärmeträgerfluids auf das eigentlich zu erwärmende Medium oder den eigentlich zu erwärmenden Körper.

Der Grundkörper und die Heizschicht können stoffschlüssig miteinander verbunden sein. Hierdurch kann ein besonders guter thermischer Kontakt zwischen dem Grundkörper und der Heizschicht realisiert werden. Insbesondere kann vorgesehen sein, dass der Grundkörper in seiner gesamten Wärmeaufnahmefläche stoffschlüssig mit der Heizschicht verbunden ist. Der Grundkörper und die Heizschicht können direkt oder indirekt stoffschlüssig miteinander verbunden sein. Zum Beispiel ist es möglich, dass die Heizschicht direkt auf die Wärmeaufnahmefläche des Grundkörpers aufgetragen ist. Direkt bedeutet in dem Zusammenhang, dass sich zwischen dem Grundkörper und der Heizschicht keine weitere Schicht befindet. Es ist aber auch möglich, dass sich zwischen dem Grundkörper und der Heizschicht eine oder mehrere Zwischenschichten befinden, die stoffschlüssig jeweils mit dem Grundkörper, der Heizschicht und (bei mehreren Zwischenschichten) untereinander stoffschlüssig verbunden sind. Unter einer stoffschlüssigen Verbindung ist eine Verbindung zu verstehen, bei denen die Verbindungspartner, in diesem Fall der Grundkörper, die Heizschicht und gegebenenfalls die Zwischenschichten durch atomare oder molekulare Kräfte zusammengehalten werden.

Zwischen der Heizschicht und dem Grundkörper ist eine elektrisch isolierende Isolationsschicht vorgesehen. Die Isolationsschicht ist in dem Fall vorteilhaft, in dem der Wärmeleitkörper aus einem Metall gefertigt ist. Die Isolationsschicht ermöglicht eine besonders einfache Ausgestaltung der Heizschicht, indem sie verhindert, dass verschiedene Punkte des Heizwiderstands über den Wärmeleitkörper elektrisch miteinander verbunden sind. Der Heizwiderstand kann beispielsweise auf die Isolationsschicht aufgedruckt oder sonstwie auf ihr befestigt sein.

Die Isolationsschicht kann beispielweise ein Keramikmaterial oder ein Polymermaterial enthalten. Das Material kann so gewählt sein, dass der Wärmeleitkörper und die Isolationsschicht angepasste (zum Beispiel identische) Wärmeausdehnungskoeffizienten haben. Thermische Verspannungen in der elektrischen Heizeinheit können auf die Weise minimiert werden.

Die Heizeinheit kann mindestens eine Steckvorrichtung aufweisen, die dazu vorgesehenen ist, mit einer komplementären Steckvorrichtung einer baugleichen zweiten Heizeinheit in Eingriff zu treten. Die Steckvorrichtungen ermöglichen es, beliebig viele Heizeinheiten untereinander auf einfache Weise mechanisch zu verbinden, zum Beispiel in einem Stapel oder in einer Reihe. Die Steckverbindungen können insbesondere derart ausgestaltet sein, dass die miteinander in einer Reihe oder in einem Stapel angeordneten Heizeinheiten fluchten.

Die Heizschicht kann auf ihrer von der Wärmeaufnahmefläche abgewandten Seite frei von einem weiteren Wärmeleitkörper sein und auf der von der Wärmeaufnahmefläche abgewandten Seite der Heizschicht auch kein Strömungsbereich für ein Wärmeträgerfluid vorgesehen sein. Beispielsweise kann auf der von der Wärmeaufnahmefläche abgewandten Seite der Heizschicht ein thermisches Isolationsmaterial und/oder ein Wärme gut reflektierendes Material vorgesehen sein. Solche Ausführungsformen, bei denen die Heizschicht nur auf einer Hauptseite mit einem Wärmeleitkörper versehen ist, haben einen bezüglich der Heizschicht asymmetrischen Aufbau. Die Wärmeaufnahmefläche und eine dem Grundkörper zugewandte Oberfläche der Heizschicht können in solchen aber auch in anderen Fällen deckungsgleich sein. Deckungsgleich bedeutet kongruent. Hierzu kann eine große Wärmeübertragungsfläche zwischen dem Grundkörper und der Heizschicht mit möglichst geringem Materialaufwand realisiert werden. Die Wärmeaufnahmefläche und die dem Grundkörper zugewandte Oberfläche der Heizschicht können beispielsweise deckungsgleiche Rechtecke definieren.

Die Wärmeabgabefläche kann größer als die Wärmeaufnahmefläche sein. Dies kann insbesondere in dem Fall vorteilhaft sein, in dem ein Wärmeleitkoeffizient für den Wärmefluss durch die Wärmeabgabefläche geringer als ein entsprechender Wärmeleitkoeffizient für den Wärmefluss durch die Wärmeaufnahmefläche ist. Ein ausreichend großer Wärmestrom durch die Wärmeabgabefläche in das Wärmeträgerfluid kann auf die Weise realisiert werden, ohne hierfür die Wärmeaufnahmefläche des Grundkörpers unnötig groß zu dimensionieren.

Die Wärmeabgabekörper können beispielsweise als Wärmerippen ausgebildet sein. Die Wärmerippen können beispielsweise in gleichmäßigen Abständen parallel zueinander auf dem Grundkörper angeordnet sein. Es kann weiter vorgesehen sein, dass jede der Wärmerippen der Heizeinheit in eine Wärmerippe einer benachbarten Heizeinheit übergeht. Dies bedeutet, dass jeweils eine Wärmerippe einer ersten Heizeinheit einstückig mit einer entsprechenden Wärmerippe einer benachbarten zweiten Heizeinheit ausgebildet ist. Der Wärmeleitkörper der ersten Heizeinheit und der Wärmeleitkörper der zweiten Heizeinheit sind in dem Fall also einstückig ausgebildet.

Die Wärmeabgabekörper können sich in einer senkrecht zu der Wärmeaufnahmefläche stehenden Ebene erstrecken. Jeder der Wärmeabgabekörper kann beispielsweise als ein flacher, sich von der Wärmeaufnahmefläche aus erstreckender Körper ausgebildet sein. Die Heizvorrichtung für ein Fahrzeug baut auf dem gattungsgemäßen Stand der Technik dadurch auf, dass sie eine Heizeinheit des hier beschriebenen Typs aufweist. Die Heizvorrichtung kann insbesondere eine Zusatzheizung für ein Kraftfahrzeug sein.

Die Heizvorrichtung kann einen Stapel aus mindestens zwei Heizeinheiten aufweisen. In diesem Zusammenhang ist unter einem Stapel eine Anordnung aus mindestens zwei Heizeinheiten zu verstehen, bei der die Heizschichten und gegebenenfalls die Isolationsschichten der Heizeinheiten parallel zueinander angeordnet sind. In dem Stapel können jeweils ein Wärmeleitkörper einer ersten Heizeinheit und ein Wärmeleitkörper einer benachbarten zweiten Heizeinheit stoffschlüssig miteinander verbunden oder aus einem Stück sein. Die beiden benachbarten Heizeinheiten können sich somit einen gemeinsamen Wärmeleitkörper teilen, wobei der gemeinsame Wärmeleitkörper aus dem genannten Wärmeleitkörper der ersten Heizeinheit und dem genannten Wärmeleitköper der zweiten Heizeinheit besteht. In anderen Worten bedeutet dies, dass der Wärmeleitkörper der ersten Heizeinheit und der Wärmeleitkörper der zweiten Heizeinheit einen gemeinsamen Wärmeleitkörper der ersten und der zweiten Heizeinheit bilden. Der gemeinsame Wärmeleitkörper verbindet somit den Grundkörper der ersten Heizeinheit mit dem Grundkörper der zweiten Heizeinheit. Von dem Grundkörper der ersten Heizeinheit aus können sich gemeinsame Wärmeabgabekörper bis zu dem Grundkörper der zweiten Heizeinheit erstrecken. Der Stapel kann von dem Wärmeträgerfluid durchströmbar sein, zum Beispiel in einer Richtung senkrecht zu der Stapelrichtung.

Die Heizvorrichtung kann eine Klemmvorrichtung aufweisen, welche die mindestens zwei Heizeinheiten gegeneinander drückt. Die Heizvorrichtung arretiert somit die Heizeinheiten relativ zueinander und bringt sie außerdem in thermisch leitenden Kontakt miteinander. Die Klemmvorrichtung kann beispielsweise mindestens einen die Heizeinheiten umlaufenden Riemen oder einen die Heizeinheiten umgreifenden Schraubstock enthalten.

Das Verfahren zur Herstellung einer Heizeinheit, insbesondere der beanspruchten Heizeinheit, baut auf dem gattungsgemäßen Stand der Technik dadurch auf, dass es folgendes aufweist: Herstellen des Wärmeleitkörpers; Auftragen der Isolationsschicht auf die Wärmeaufnahmefläche und Auftragen der Heizschicht auf die Isolationsschicht. Der Wärmeleitkörper wird dabei als Substrat genutzt, so dass auf einen zusätzlichen Trägermaterialstreifen oder ein anderes Substrat für die Heizschicht verzichtet werden kann.

Der Wärmeleitkörper kann in vorteilhafter Weise aus einem Metall oder einer Legierung mit einem relativ niedrigen Schmelzpunkt hergestellt werden oder ein solches Material zumindest enthalten. Beispielsweise kann Aluminium und/oder Magnesium verwendet werden.

Zur Herstellung des Wärmeleitkörpers können insbesondere Gieß-, Spritzgieß- oder Strangpressverfahren in Betracht kommen.

Die Isolationsschicht kann beispielsweise in einem Plasmabeschichtungsverfahren auf die Wärmeaufnahmefläche aufgetragen werden. Beispielsweise kann die Isolationsschicht als Plasma auf die Wärmeaufnahmefläche aufgesprüht werden.

Die Isolationsschicht kann ein Keramikmaterial oder ein Polymermaterial enthalten oder aus einem solchen Material bestehen, wobei als Keramikmaterial beispielsweise Al₂O₃ in Frage kommt.

Die Heizschicht kann beispielsweise in einem Plasmabeschichtungsverfahren oder in einem Siebdruckverfahren oder als Widerstandspaste auf die Isolationsschicht aufgetragen werden. In dem Plasmabeschichtungsverfahren kann beispielsweise zunächst eine elektrisch leitende Schicht auf die Isolationsschicht aufgetragen werden. Aus der elektrisch leitfähigen Schicht können anschließend Bereiche ausgeschnitten werden, so dass eine Leiterbahn oder mehrere Leiterbahnen übrig bleiben. Die Leiterbahnen können dann den Heizwiderstand oder mehrere Heizwiderstände bilden. Die genannten Bereiche können beispielsweise mithilfe eines Lasers aus der leitfähigen Schicht herausgeschnitten werden. Die leitfähige Schicht kann beispielsweise eine Metallschicht sein. Die Heizschicht kann beispielsweise Nickel und Chrom enthalten oder nur aus diesen Materialien bestehen. In diesem Fall können beispielsweise 70 bis 90 % Nickel und 10 bis 30 % Chrom verwendet werden, wobei ein Verhältnis von 80 % Nickel und 20 % Chrom als gut geeignet betrachtet wird.

Die Erfindung wird anschließend unter Bezugnahme auf die beigefügten Zeichnungen näher erläutert. In den Zeichnungen bezeichnen gleiche Bezugszeichen gleiche oder ähnliche Komponenten.

Es zeigen:
- Figur 1: eine schematische Draufsicht auf ein Ausführungsbeispiel einer Heizschicht;
- Figur 2: einen schematischen Querschnitt durch ein Ausführungsbeispiel einer elektrischen Heizeinheit;
- Figur 3: einen schematischen Querschnitt durch ein weiteres Ausführungsbeispiel einer elektrischen Heizeinheit;
- Figur 4: schematische Ansichten eines weiteren Ausführungsbeispiels einer elektrischen Heizeinheit;
- Figur 5: einen schematischen Querschnitt durch ein Ausführungsbeispiel eines Stapels aus mehreren elektrischen Heizeinheiten;
- Figur 6: eine schematische Funktionsskizze eines Ausführungsbeispiels einer Heizvorrichtung;
- Figur 7: ein Flussdiagramm eines Ausführungsbeispiels eines Verfahrens zur Herstellung einer Heizeinheit.

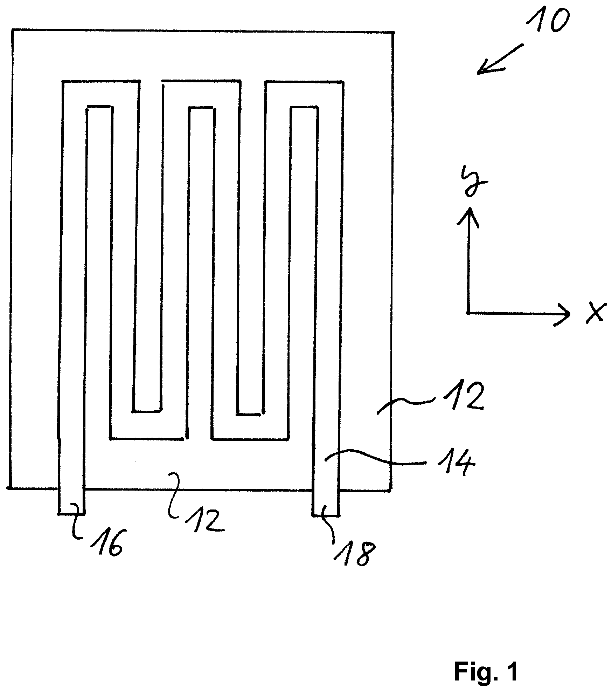

Figur 1 zeigt eine Heizschicht 10 mit zwei elektrisch isolierenden Bereichen 12 und einer elektrisch leitenden Leiterbahn 14. Die Leiterbahn 14 weist ein erstes Ende 16 und ein zweites Ende 18 auf und bildet einen Heizwiderstand. Das erste Ende 16 und das zweite Ende 18 dienen als Kontakte, über die eine elektrische Spannung an die Leiterbahn angelegt werden kann. In dem gezeigten Beispiel ist die Leiterbahn 14 serpentinenförmig. Dies bietet zum einen den Vorteil, auf einer vergleichsweise geringen Fläche eine große Leiterlänge bereitzustellen. Zum anderen ermöglicht es, das erste Ende 16 und das zweite Ende 18 an derselben Kante der zum Beispiel rechteckigen Heizschicht 12 anzuordnen.

Die durch die Heizschicht definierte Ebene wurde in dieser wie auch in den anderen Zeichnungen als xy-Ebene gewählt. Dabei wird in allen Zeichnungen dasselbe xyz-Koordinatensystem verwendet.

Die Leiterbahn 14 kann in ein elektrisch isolierendes Material, welches in diesem Beispiel die Bereiche 12 ausfüllt, eingebettet sein. Alternativ ist es möglich, dass die Leiterbahn 14 auf einer Trägeroberfläche verläuft und die isolierenden Bereich 12 durch ein Umgebungsmedium, zum Beispiel Luft, ausgefüllt sind.

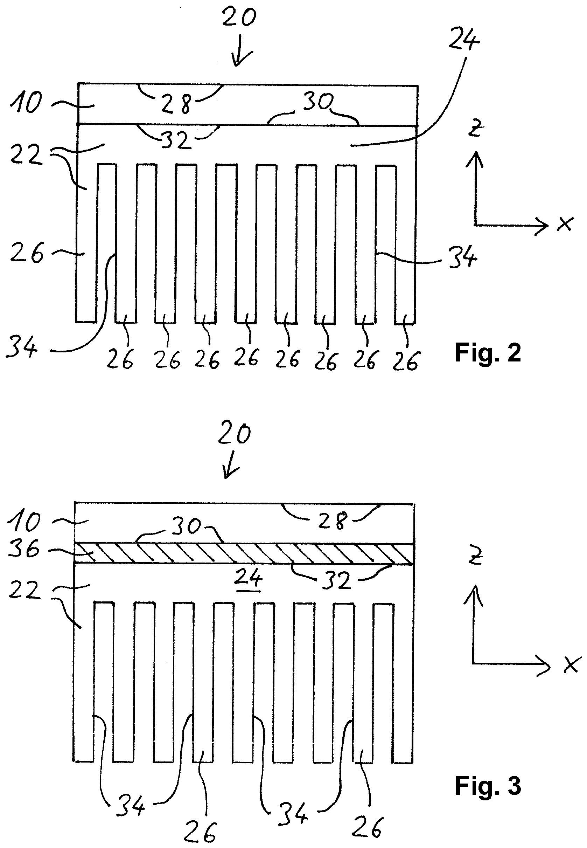

Figur 2 zeigt eine elektrische Heizeinheit 20 für eine Heizvorrichtung für ein Fahrzeug. Die Heizeinheit 20 weist eine Heizschicht 10 und einen Wärmeleitkörper 22 auf. Die Heizschicht 10 weist mindestens einen Heizwiderstand auf. Die Heizschicht 10 kann beispielsweise die mit Bezug auf Figur 1 beschriebene Heizschicht 10 sein. Der Wärmeleitkörper 22 weist eine Wärmeaufnahmefläche 32 zur Aufnahme von Wärme von der Heizschicht 10 auf. Der Wärmeleitkörper 22 weist ferner eine Wärmeabgabefläche 34 zur Abgabe von Wärme an ein Wärmeträgerfluid auf. Das Wärmeträgerfluid kann ein an der Wärmeabgabefläche 34 vorbeiströmendes Medium, zum Beispiel Luft oder eine Flüssigkeit, sein.

Der Wärmeleitkörper 22 weist einen Grundkörper 24 und mehrere Wärmeabgabekörper 26 auf. In dem gezeigten Beispiel ist der Grundkörper 24 ein flacher Quader, der sich parallel zu der xy-Ebene erstreckt. Ausgehend von dem Grundkörper 24 erstrecken sich in diesem Beispiel insgesamt neun als Wärmerippen ausgebildete Wärmeabgabekörper 26 jeweils in einer zu der yz-Ebene parallelen Ebene. Der Grundkörper 24 und die Wärmeabgabekörper 26 sind stoffschlüssig miteinander verbunden oder aus einem Stück. Der Wärmeleitkörper 22 kann beispielsweise aus einem einzigen Metallstück bestehen. Die Wärmeaufnahmefläche 32 ist eine Oberfläche des Grundkörpers 24, die der Heizschicht 10 zugewandt ist und sich parallel zu der Heizschicht 10, in diesem Beispiel also parallel zu der xy-Ebene, erstreckt. Die Wärmeabgabefläche 34 ist eine Oberfläche der Wärmeabgabekörper 26. In diesem Beispiel besteht die Wärmeabgabefläche 34 aus den einzelnen, nicht zusammenhängenden Oberflächen der Wärmeabgabekörper 26.

Im Betrieb wird eine elektrische Spannung an den Heizwiderstand der Heizschicht 10 angelegt. Die dabei entstehende Wärme diffundiert in den Grundkörper 24 des Wärmeleitkörpers 22 und von dort aus weiter in die einzelnen Wärmeabgabekörper 26. Von den Wärmeabgabekörpern 26 diffundiert die Wärme weiter in das an den Wärmeabgabekörpern 26 vorbeiströmende oder sich dort stationär befindende Wärmeträgerfluid, zum Beispiel Luft oder eine Flüssigkeit.

Figur 3 zeigt eine Variante der mit Bezug auf Figur 2 beschriebenen Heizeinheit 20. Während bei der in Figur 2 gezeigten Heizeinheit 20 die Heizschicht 10 unmittelbar auf der Wärmeaufnahmefläche 32 des Grundkörpers 24 aufliegt und stoffschlüssig direkt mit dem Grundkörper 24 verbunden ist, befindet sich bei der Heizeinheit in Figur 3 zwischen der Heizschicht 10 und dem Grundkörper 24 eine elektrische isolierende Isolationsschicht 36. Die Isolationsschicht 36 kann beispielsweise ein Keramikmaterial oder Polymermaterial enthalten.

Bei beiden der mit Bezug auf Figur 2 und Figur 3 beschriebenen Ausführungsformen sind die Wärmeaufnahmefläche 32 und die dem Grundkörper 24 zugewandte Oberfläche der Heizschicht 10 deckungsgleich. In Figur 2 und Figur 3 sind sie jeweils rechteckig und erstrecken sich jeweils parallel zu der xy-Ebene. Da in beiden Fällen nur auf einer Hauptseite der Heizschicht 10 ein Wärmeleitkörper 22 vorgesehen ist, handelt es sich um bezüglich der Heizschicht 10 asymmetrische Aufbauten. Auf der Seite der Heizschicht 10, auf der kein Wärmeleitkörper vorgesehen ist, kann beispielsweise ein thermisches Isolationsmaterial (nicht dargestellt) oder ein Wärme gut reflektierendes Material (ebenfalls nicht dargestellt) vorgesehen sein.

Die Isolationsschicht 36 kann weniger als einen Millimeter dick sein. Die Dicke der Isolationsschicht 36 ist in den Zeichnungen die Abmessung der Isolationsschicht 36 in der z-Richtung. Sie kann beispielsweise 300 Mikrometer betragen.

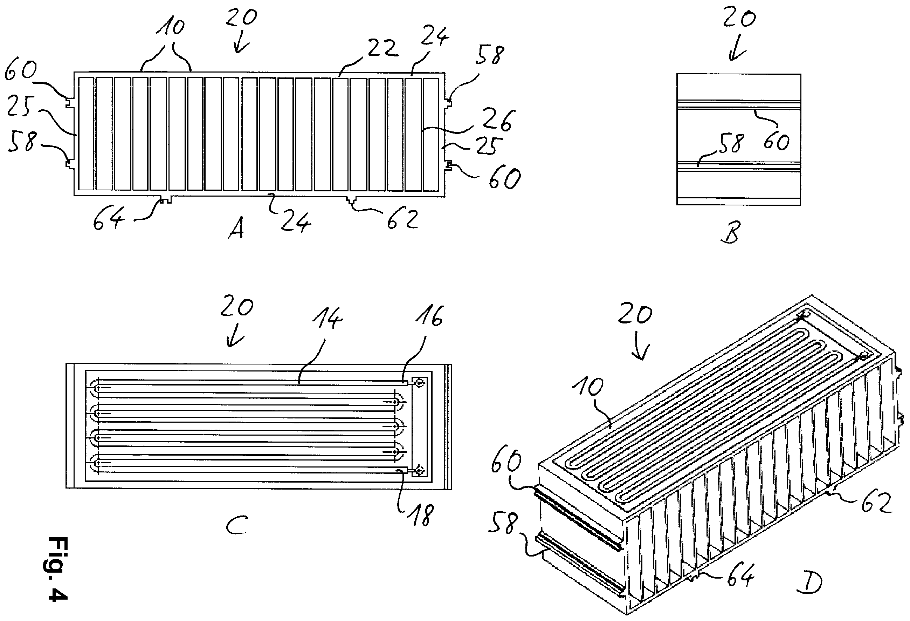

Figur 4 zeigt schematisch eine weitere Ausführungsform der Heizeinheit 20, aus vier unterschiedlichen Blickwinkeln A, B, C und D gesehen. Der Wärmeleitkörper 22 weist einen quaderförmigen Außenumriss auf. Der Wärmeleitkörper 20 weist zwei Grundkörper 24 auf. Die beiden Grundkörper 24 sind als rechteckige Platten ausgebildet, zwischen denen sich die Wärmeabgabekörper 26 erstrecken. Die beiden Grundkörper 24 sind ferner über zwei Seitenwände 25 miteinander verbunden. Jede der beiden Seitenwände 25 weist eine erste Steckvorrichtung 58 und eine zweite Steckvorrichtung 60 auf. Die beiden Steckvorrichtungen 58 und 60 ermöglichen es, die gezeigte Heizeinheit 20 mit einer ähnlichen oder identischen weiteren Heizeinheit (nicht gezeigt) zu verzahnen. Die erste Steckvorrichtung 58 und die zweite Steckvorrichtung 60 sind komplementär zueinander ausgebildet. Dies bedeutet, dass die erste Steckvorrichtung 58 imstande ist, mit einer zu der zweiten Steckvorrichtung 60 identischen Steckvorrichtung der (hier nicht gezeigten) zweiten Heizeinheit in Eingriff zu treten. Die ersten Steckvorrichtungen 58 und die zweiten Steckvorrichtungen 60 ermöglichen es, mehrere identische Heizeinheiten 20 in einer senkrecht zu den Seitenflächen 25 verlaufenden Stapelrichtung zu stapeln. Die ersten Steckvorrichtungen 58 und die zweiten Steckvorrichtungen 60 sind in dem gezeigten Beispiel als parallel zueinander verlaufende Leisten ausgebildet. Die erste Steckvorrichtung 58 weist eine zentrale Mittelleiste auf, während die zweite Steckvorrichtung eine zu der Mittelleiste komplementäre Nut aufweist.

Die Heizeinheit 20 weist ferner zumindest an einem ihrer beiden Grundkörper 24 eine dritte Steckvorrichtung 62 und eine vierte Steckvorrichtung 64 auf. In dem gezeigten Beispiel sind die dritte Steckvorrichtung 62 und die vierte Steckvorrichtung 64 von demselben Typ wie die bereits beschriebne erste Steckvorrichtung 58 und die zweite Steckvorrichtung 60. Die dritte Steckvorrichtung 62 und die vierte Steckvorrichtung 64 können beispielsweise dazu verwendet werden, die Heizeinheit 20 an einem geeigneten Träger (nicht dargestellt) zu befestigen. Der Träger kann Steckvorrichtungen aufweisen, die zu der dritten Steckvorrichtung 62 und der vierten Steckvorrichtung 64 komplementär sind und mit ihnen in Eingriff treten können.

Auf der dem Grundkörper 24 abgewandten Seite der Heizschicht 10 kann sich eine weitere Heizeinheit (nicht dargestellt) anschließen. Die beiden Heizeinheiten können beispielsweise stoffschlüssig miteinander verbunden sein. Die nicht gezeigte weitere Heizeinheit kann auf ihrer der gezeigten Heizeinheit 20 abgewandten Seite ebenfalls eine dritte und eine vierte Steckvorrichtung 62, 64 aufweisen. Das so gebildete Paar, das die Heizschicht 10 sowie beidseitig davon angeordnet jeweils einen Wärmeleitkörper 22 umfasst, kann dann mit baugleichen Einheiten in einer zu der Heizschicht 10 senkrecht verlaufenden Stapelrichtung stabil gestapelt werden.

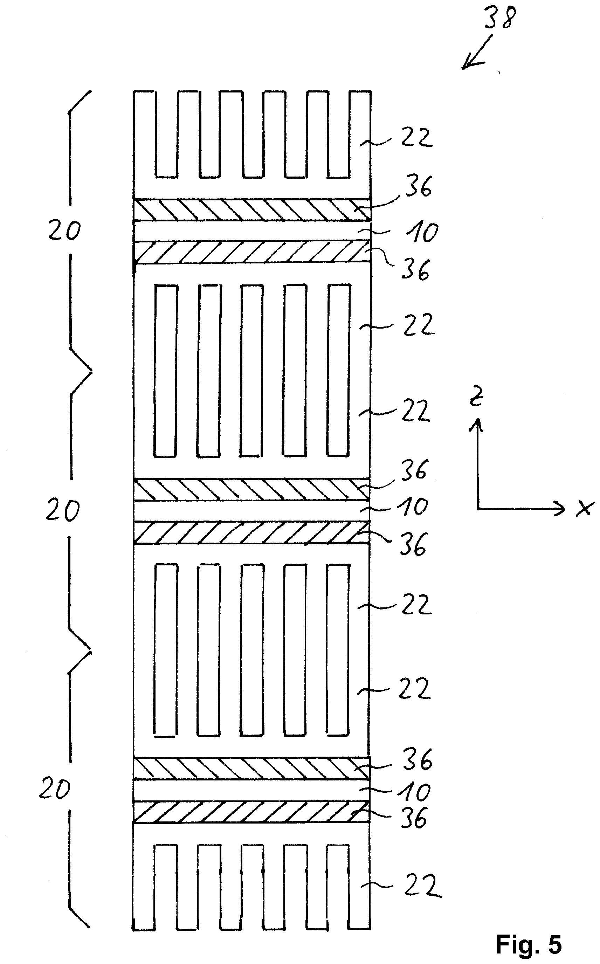

Figur 5 zeigt einen Stapel 38 aus insgesamt drei aufeinandergestapelten Heizeinheiten 20. Jede der Heizeinheiten 20 besitzt eine Heizschicht 10 sowie auf beiden Seiten der Heizschicht 10 jeweils einen Wärmeleitkörper 22. Zwischen dem Wärmeleitkörper 22 und dem Heizelement 10 ist jeweils eine Isolationsschicht 36 angeordnet. In dem Beispiel ist jede der drei Heizeinheiten 20 spiegelsymmetrisch bezüglich einer Mittelebene der Heizschicht 10. Dadurch, dass einem Wärmeabgabekörper 26 des einen Wärmeleitkörpers 22 jeweils genau ein Wärmeabgabekörper des auf der anderen Seite der Heizschicht 10 angeordneten Wärmeleitkörpers 22 gegenüberliegt, ergibt sich eine besonders hohe mechanische Robustheit.

In dem gezeigten Beispiel ist jeder Wärmeleitkörper 22, abgesehen von dem obersten Wärmeleitkörper 22 und dem untersten Wärmeleitkörper 22, in dem Stapel stoffschlüssig mit einem Wärmeleitkörper 22 einer benachbarten Heizeinheit 20 verbunden. Die beiden derart miteinander verbundenen Wärmeleitkörper 22 können beispielsweise aus einem Stück gefertigt sein. Jedes Paar aus einem ersten Wärmeleitkörper 22 und einem zweiten Wärmeleitkörper 22 besitzt zwei Grundkörper, die über Wärmeabgabekörper miteinander verbunden sind.

Durch den Stapelaufbau wird im Vergleich zu einer einzigen Heizeinheit derselben Größe eine gleichmäßigere Temperaturverteilung erzielt.

Eine stoffschlüssige Verbindung mehrerer Heizeinheiten kann technisch schwierig sein. Als Alternative zu der stoffschlüssigen Verbindung können die Heizeinheiten lose aufeinandergestapelt und durch eine außen anliegende Klemmvorrichtung gegeneinander verpresst werden. Die Klemmvorrichtung kann beispielsweise Schrauben oder Klemmen zum Erzeugen der erforderlichen Presskraft aufweisen.

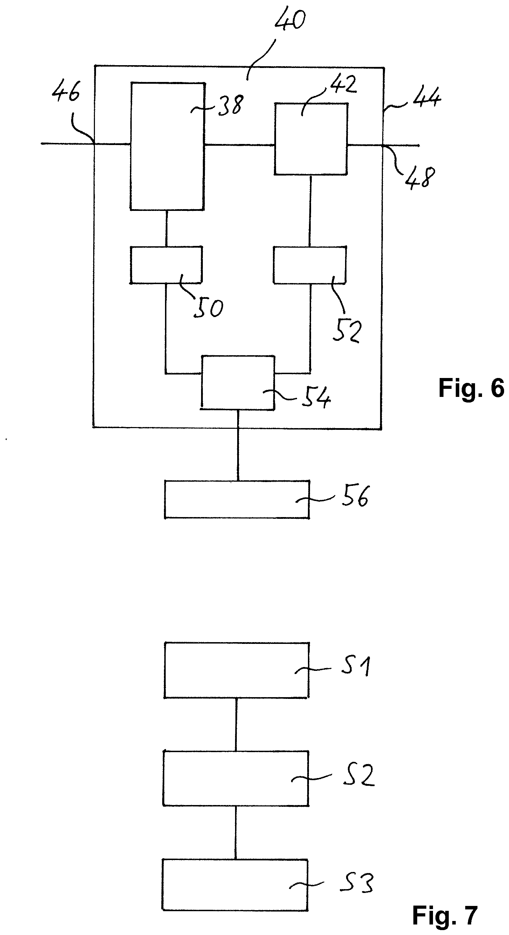

Figur 6 zeigt schematisch ein Beispiel einer Heizvorrichtung 40 für ein Fahrzeug. Die Heizvorrichtung 40 beinhaltet einen Stapel 38 aus mehreren Heizeinheiten. Die Heizvorrichtung kann mehr als einen einzigen Stapel 38 beinhalten. Der Stapel 38 kann der mit Bezug auf Figur 5 beschriebene Stapel 38 sein. Die Heizvorrichtung 40 weist ferner ein Gebläse 42, eine erste Leistungssteuereinheit 50, eine zweite Leistungssteuereinheit 52 sowie eine elektronische Steuereinheit 54 auf. Die elektronische Steuereinheit 54 kann beispielweise mit einem Datenbus 56 des Fahrzeugs verbunden sein. Die Komponenten 38, 42, 50, 52, 54 sind in einem gemeinsamen Gehäuse 44 angeordnet. Das Gehäuse 44 weist einen Lufteinlass 46 und einen Luftauslass 48 auf.

Im Betrieb saugt das Gebläse Luft über den Lufteinlass 46 und den Stapel 38 an. Die angesaugte Luft verlässt die Heizvorrichtung 40 über das Gebläse 42 und den Luftauslass 48. Beim Durchströmen des Stapels 38 wird sie von diesem erwärmt. Die erste Leistungssteuereinheit 50 steuert die Heizleistung des Stapels 38, beispielsweise durch Regelung einer an den Stapel 38 oder jeweils an die einzelnen Heizwiderstände angelegten elektrischen Spannung oder eines durch die Heizwiderstände fließenden elektrischen Stromes. Die zweite Leitungssteuereinheit 52 steuert die Leitung des Gebläses 42 und damit den Durchsatz der zu erwärmenden Luft. Die elektronische Steuereinheit 54 wiederum steuert die erste Leistungssteuereinheit 50 und die zweite Leistungssteuereinheit 52 in Abhängigkeit von Signalen, die sie von dem Datenbus 56 empfängt. Die Heizvorrichtung 40 kann zum Beispiel in ein Kraftfahrzeug angeordnet sein.

Andere Aufbauten als der in Figur 6 gezeigte sind ebenfalls möglich. Insbesondere können einzelne Komponenten außerhalb des Gehäuses angeordnet sein.

Das Flussdiagramm in Figur 7 veranschaulicht ein Beispiel eines Verfahrens zur Herstellung einer Heizeinheit 20. Die Heizeinheit 20 kann zum Beispiel die in Figur 3 gezeigte Heizeinheit sein. In einem ersten Schritt S1 wird ein Wärmeleitkörper 22 hergestellt. Der Wärmeleitkörper kann beispielsweise in einem Stück durch Gießen oder Spritzgießen aus Metall hergestellt werden. Anschließend wird die Isolationsschicht 36 auf die Wärmeaufnahmefläche 32 des Grundkörpers aufgetragen, zum Beispiel in einem Plasmabeschichtungsverfahren (S2). Auf die Isolationsschicht 36 wird anschließend die Heizschicht 10 aufgetragen (S3), zum Beispiel in einem Plasmabeschichtungsverfahren oder in einem Siebdruckverfahren oder als Widerstandspaste. Der in Figur 5 gezeigte Stapel 38 lässt sich unter Verwendung der mit Bezug auf Figur 7 beschriebenen Schritte abschnittsweise herstellen.

Durch die hier beschriebenen stoffschlüssigen Verbindungen zwischen den jeweiligen Kontaktpartnern kann vermieden werden, dass sich Luft an unerwünschten Stellen zwischen den Kontaktpartnern befindet. Der Wärmeübergang zwischen den Kontaktpartnern kann daher deutlich verbessert werden.

### Bezugszeichenliste

- 10: Heizschicht
- 12: isolierender Bereich
- 14: Leiterbahn
- 16: erstes Ende
- 18: zweites Ende
- 20: Heizeinheit
- 22: Wärmeleitkörper
- 24: Grundkörper
- 25: Seitenwand
- 26: Wärmeabgabekörper
- 28: Oberfläche
- 30: Oberfläche
- 32: Wärmeaufnahmefläche
- 34: Wärmeabgabefläche
- 36: Isolationsschicht
- 38: Stapel
- 40: Heizvorrichtung
- 42: Gebläse
- 44: Gehäuse
- 46: Lufteinlass
- 48: Luftauslass
- 50: erste Leistungssteuereinheit
- 52: zweite Leistungssteuereinheit
- 54: elektronische Steuereinheit
- 56: Datenbus
- 58: erste Steckvorrichtung
- 60: zweite Steckvorrichtung
- 62: dritte Steckvorrichtung
- 64: vierte Steckvorrichtung

## Patentansprüche

1. Elektrische Heizeinheit (20) für eine Heizvorrichtung (40) für ein Fahrzeug, mit einer Heizschicht (10) und einem aus einem Metall gefertigten Wärmeleitkörper (22), wobei die Heizschicht (10) mindestens einen Heizwiderstand (14) aufweist und der Wärmeleitkörper (22) eine Wärmeaufnahmefläche (32) zur Aufnahme von Wärme von der Heizschicht (10) und eine Wärmeabgabefläche (34) zur Abgabe von Wärme an ein Wärmeträgerfluid aufweist, wobei der Wärmeleitkörper (22) einen Grundkörper (24) und mindestens zwei Wärmeabgabekörper (26) aufweist, wobei der Grundkörper (24) und die Wärmeabgabekörper (26) stoffschlüssig miteinander verbunden oder aus einem Stück sind, und wobei die Wärmeaufnahmefläche (32) eine der Heizschicht (10) zugewandte und sich parallel zu der Heizschicht (10) erstreckende Oberfläche des Grundkörpers (24) ist und die Wärmeabgabefläche (34) eine Oberfläche der Wärmeabgabekörper (26) ist, wobei zwischen der Heizschicht (10) und dem Grundkörper (24) eine elektrisch isolierende Isolationsschicht (36) vorgesehen ist, und wobei der Grundkörper (24), die elektrisch isolierende Isolationsschicht (36) und die Heizschicht (10) stoffschlüssig untereinander verbunden sind, wobei die elektrisch isolierende Isolationsschicht (36) auf den als Substrat dienenden Wärmeleitkörper (22) aufgetragen ist und die Heizschicht (10) auf die elektrisch isolierende Isolationsschicht aufgetragen ist, **dadurch gekennzeichnet, dass** die Isolationsschicht ein Keramikmaterial oder ein Polymermaterial enthält, so dass die Isolationsschicht einen an den Wärmeausdehnungskoeffizienten des Wärmeleitkörpers angepassten Wärmeausdehnungskoeffizienten hat.

2. Heizeinheit (20) nach Anspruch 1, wobei die Heizeinheit (20) mindestens eine Steckvorrichtung (58; 62) aufweist, die dazu vorgesehenen ist, mit einer komplementären Steckvorrichtung (60; 64) einer baugleichen zweiten Heizeinheit (20) in Eingriff zu treten.

3. Heizeinheit (20) nach einem der vorangehenden Ansprüche, wobei die Heizschicht (10) auf ihrer von der Wärmeaufnahmefläche (32) abgewandten Seite frei von einem weiteren Wärmeleitkörper ist und wobei auf der von der Wärmeaufnahmefläche (32) abgewandten Seite der Heizschicht (10) auch kein Strömungsbereich für ein Wärmeträgerfluid vorgesehen ist.

4. Heizeinheit (20) nach einem der vorangehenden Ansprüche, wobei die Wärmeabgabefläche (34) größer als die Wärmeaufnahmefläche (32) ist.

5. Heizeinheit (20) nach einem der vorangehenden Ansprüche, wobei die Wärmeabgabekörper (26) als Wärmerippen ausgebildet sind.

6. Heizeinheit (20) nach einem der vorangehenden Ansprüche, wobei sich die Wärmeabgabekörper (26) in einer senkrecht zu der Wärmeaufnahmefläche (32) stehenden Ebene erstrecken.

7. Heizvorrichtung (40) für ein Fahrzeug, mit einer Heizeinheit (20) nach einem der vorangehenden Ansprüche.

8. Heizvorrichtung (40) nach Anspruch 7, mit einem Stapel (38) aus mindestens zwei Heizeinheiten (20) nach einem der vorangehenden Ansprüche.

9. Heizvorrichtung (40) nach Anspruch 8, mit einer Klemmvorrichtung, die die mindestens zwei Heizeinheiten (20) gegeneinander drückt.

10. Verfahren zur Herstellung einer Heizeinheit (20) nach Anspruch 1, wobei das Verfahren aufweist:
- Herstellen (S1) des Wärmeleitkörpers (22);
- Auftragen (S2) der Isolationsschicht (36) auf die Wärmeaufnahmefläche (32); und
- Auftragen (S3) der Heizschicht (10) auf die Isolationsschicht (36).

11. Verfahren nach Anspruch 10, wobei die Isolationsschicht (36) in einem Plasmabeschichtungsverfahren auf die Wärmeaufnahmefläche (32) aufgetragen wird (S2).

12. Verfahren nach Anspruch 10 oder 11, wobei die Heizschicht (10) in einem Plasmabeschichtungsverfahren oder in einem Siebdruckverfahren oder als Widerstandspaste auf die Isolationsschicht (36) aufgetragen wird (S3).

## Claims

1. An electrical heating unit (20) for a heating device (40) for a vehicle comprising a heating layer (10) and a heat conducting body (22) made of metal, wherein the heating layer (10) comprises at least one heating resistor (14), and the heat conducting body (22) comprises a heat absorbing face (32) for absorbing heat from the heating layer (10) and a heat releasing face (34) for releasing heat to a heat carrier fluid, wherein the heat conducting body (22) comprises a base body (24) and at least two heat releasing bodies (26), wherein the base body (24) and the heat releasing bodies (26) are connected to each other by substance bonding or are integrally formed, wherein the heat absorbing face (32) is a surface of the base body (24) facing the heating layer (10) and extending parallel to the heating layer (10), and the heat releasing face (34) is a surface of the heat releasing bodies (26), wherein an electrically insulating insulation layer (36) is provided between the heating layer (10) and the base body (24) and wherein the base body (24), the electrically insulating insulation layer (36), and the heating layer (10) are connected to each other by substance bonding, wherein the electrically insulating insulation layer (36) is applied to the heat conducting body (22) that serves as a substrate and the heating layer (10) is applied to the electrically insulating insulation layer (36), **characterized in that** the insulation layer (36) contains a ceramic material or a polymer material, such that the insulation layer has a heat expansion coefficient matching with the heat expansion coefficient of the heat conducting body.

2. The heating unit (20) according to claim 1, wherein the heating unit (20) comprises at least one plug-in device (58; 62) provided to engage with a complementary plug-in device (60; 64) of a second heating unit (20) having the identical in construction.

3. The heating unit (20) according to one of the preceding claims, wherein the heating layer (10) is free of another heat conducting body on its side facing away from the heat absorbing face (32), and wherein no flow area for a heat carrier fluid is provided on the side of the heating layer (10) facing away from the heat absorbing face (32) either.

4. The heating unit (20) according to one of the preceding claims, wherein the heat releasing face (34) is larger than the heat absorbing face (32).

5. The heating unit (20) according to one of the preceding claims, wherein the heat releasing bodies (26) are formed as heat ribs.

6. The heating unit (20) according to one of the preceding claims, wherein the heat releasing bodies (26) extend in a plane perpendicular to the heat absorbing face (32).

7. A heating device (40) for a vehicle comprising a heating unit (20) according to one of the preceding claims.

8. The heating device (40) according to claim 7 comprising a stack (38) of at least two heating units (20) according to one of the preceding claims.

9. The heating device (40) according to claim 8 comprising a clamping device pressing the at least two heating units (20) against each other.

10. A method for producing a heating unit (20) according to claim 1, wherein the method comprises:
- manufacturing (S1) the heat conducting body (22);
- applying (S2) the insulation layer (36) to the heat absorbing face (32); and
- applying (S3) the heating layer (10) to the insulation layer (36).

11. The method according to claim 10, wherein the insulation layer (36) is applied (S2) to the heat absorbing face (32) using a plasma coating method.

12. The method according to claim 10 or 11, wherein the heating layer (10) is applied (S3) to the insulation layer (36) a plasma coating method or by a screen printing method or as resistor paste.

## Revendications

1. Unité de chauffage électrique (20) destinée à un dispositif de chauffage (40) pour un véhicule, comportant une couche chauffante (10) et un corps conducteur de chaleur (22) constitué d'un métal, dans laquelle la couche chauffante (10) est pourvue d'au moins une résistance chauffante (14) et le corps conducteur de chaleur (22) est pourvu d'une surface d'absorption de chaleur (32) destinée à absorber la chaleur de la couche chauffante (10) et d'une surface de dissipation de chaleur (34) destinée à dissiper la chaleur vers un fluide caloporteur, dans laquelle le corps conducteur de chaleur (22) comporte un corps de base (24) et au moins deux corps de dissipation de chaleur (26), dans laquelle le corps de base (24) et les corps de dissipation de chaleur (26) sont reliés entre eux par complémentarité de matériaux ou sont réalisés d'une seule pièce, et dans laquelle la surface d'absorption de chaleur (32) est une surface du corps de base (24) qui est tournée vers la couche chauffante (10) et s'étendant parallèlement à la couche chauffante (10), et la surface de dissipation de chaleur (34) est une surface des corps de dissipation de chaleur (26), dans laquelle une couche d'isolation électriquement isolante (36) est prévue entre la couche chauffante (10) et le corps de base (24), et dans laquelle le corps de base (24), la couche d'isolation électriquement isolante (36) et la couche chauffante (10) sont reliées entre elles par complémentarité de matériaux, dans laquelle la couche d'isolation électriquement isolante (36) est appliquée sur le corps conducteur de chaleur (22) servant de substrat et la couche chauffante (10) est appliquée sur la couche d'isolation électriquement isolante,
**caractérisée en ce que** la couche d'isolation contient un matériau céramique ou un matériau polymère, de manière à ce que la couche d'isolation ait un coefficient de dilatation thermique adapté au coefficient de dilatation thermique du corps conducteur de chaleur.

2. Unité de chauffage (20) selon la revendication 1, dans laquelle l'unité de chauffage (20) comporte au moins un dispositif à fiche (58 ; 62) destiné à s'engager sur un dispositif à fiche complémentaire (60 ; 64) d'une seconde unité de chauffage (20) du même type.

3. Unité de chauffage (20) selon l'une des revendications précédentes, dans laquelle la couche chauffante (10) est exempte d'un autre corps conducteur de chaleur sur son côté qui est tourné à l'opposé de la surface d'absorption de chaleur (32), et
dans laquelle, sur le côté de la couche chauffante (10) qui est tourné à l'opposé de la surface d'absorption de chaleur (32), il n'est pas non plus prévu de zone de circulation d'un fluide caloporteur.

4. Unité de chauffage (20) selon l'une des revendications précédentes, dans laquelle la surface de dissipation de chaleur (34) est plus grande que la surface d'absorption de chaleur (32).

5. Unité de chauffage (20) selon l'une des revendications précédentes, dans laquelle les corps de dissipation de chaleur (26) sont réalisés sous la forme d'ailettes thermiques.

6. Unité de chauffage (20) selon l'une des revendications précédentes, dans laquelle les corps de dissipation de chaleur (26) s'étendent dans un plan perpendiculaire à la surface d'absorption de chaleur (32).

7. Dispositif de chauffage (40) pour un véhicule, comprenant une unité de chauffage (20) selon l'une des revendications précédentes.

8. Dispositif de chauffage (40) selon la revendication 7, comprenant un empilement (38) d'au moins deux unités de chauffage (20) selon l'une des revendications précédentes.

9. Dispositif de chauffage (40) selon la revendication 8, comportant un dispositif de serrage qui presse lesdites au moins deux unités de chauffage (20) l'une contre l'autre.

10. Procédé de réalisation d'une unité de chauffage (20) selon la revendication 1, le procédé comprenant :
- la réalisation (S 1) du corps conducteur de chaleur (22) ;
- l'application (S2) de la couche d'isolation (36) sur la surface d'absorption de chaleur (32) ; et
- l'application (S3) de la couche chauffante (10) sur la couche d'isolation (36).

11. Procédé selon la revendication 10, dans lequel la couche d'isolation (36) est appliquée (S2) sur la surface d'absorption de chaleur (32) par un procédé de revêtement au plasma.

12. Procédé selon la revendication 10 ou 11, dans lequel la couche chauffante (10) est appliquée (S3) sur la couche d'isolation (36) par un procédé de revêtement par plasma ou par un procédé de sérigraphie ou sous la forme d'une pâte résistante.
